# EUROPEAN PATENT APPLICATION

(11) **EP 4 350 915 A1**
(43) Date of publication of application: **10.04.2024**
(21) Application number: 23201472.0
(22) Date of filing: 03.10.2023
(51) Int. Cl.: H02G 3/14, H02G 3/08, H02G 3/12

(54) **A COVER PLATE FOR ASSEMBLIES FOR THE INSTALLATION OF ELECTRIC MODULES**

(30) Priority: 03.10.2022 IT 202200020268
(71) Applicant: Vimar S.p.A., 36063 Marostica (VI) (IT)
(72) Inventor: ZAMPIERIN, Ilario, 36061 Bassano del Grappa (VI) (IT); BALDISSERA, Stefano, 36043 Camisano Vicentino (VI) (IT); MOCELLIN, Dario, 36061 Bassano del Grappa (VI) (IT)
(74) Representative: Locas, Davide

(57) **Abstract**

A cover plate for assemblies for the installation of electric modules comprises a main frame structure, an auxiliary frame structure which is connected to said main frame structure and an abutment element which is configured so as to connect the auxiliary frame structure and the main frame structure, keeping them in contact, in a zone adjacent to a through-opening formed on the main frame structure. The abutment element defines a separation distance between the auxiliary frame structure and the main frame structure in a peripheral zone. The auxiliary frame structure has weaker rigidity than the main frame structure so as to be able to be deformed in order to reduce said separation distance.

## Description

The present invention refers to a cover plate for assemblies for the wall installation of electric modules.

The invention also refers to an assembly for the installation of electric modules comprising the cover plate itself and a support frame intended to receive one or more electric modules, wherein the cover plate is configured to cover a perimeter structure of the frame. The support frame may be intended to be fixed to a fixed structure, typically a wall, or other element on which it is wished to mount the electric module.

In the technical field relevant to the civil and industrial electric systems, wall-fixable supports and electric modules, such as, for example, control devices (switches, buttons, diverters, etc.) or sockets, which can be connected stably to the support by means of appropriate coupling systems are commonly used. Typically, the wall-fixable support is also associated with a plate that covers the installation zone so as to hide the support from view and leave a uniform surface with appreciable aesthetic characteristics visible.

In order to avoid accidental damages to the plates during the installation of the systems, as well as to allow access to the electric modules for maintenance purposes, they are provided with a coupling system that allows the fixing and the subsequent removal of the plate from the support.

Typically, the coupling systems adopted allow to adjust the distance between the plate and the support on which it is mounted, so as to be able to compensate for any laying errors of the support.

In fact, it should be noted that there is not always a perfect alignment between the support and the wall and the possibility of adjusting the distance between the plate and the support actually makes it possible to compensate, at least partially, for these errors. In this way it is possible to keep the plate in contact with the wall or the relevant surface on which the support is mounted. This can avoid the presence of spaces between the wall and the plate, a feature that, for obvious reasons, is not visually pleasant to the users. In addition, any spaces can favour the entry of dust or other unwanted elements under the plate, reaching the components protected by it.

However, solely providing for adjusting the fixing distance between the plate and the support is not always sufficient for an adequate compensation, in particular in order to bring the plate correctly into contact with the wall.

In fact, the walls may not be perfectly regular, with the consequence that the plate remains only partially in contact with the wall.

In addition, the compensation normally offered by the fixing systems allows an adjustment of the distance between plate and support, but it lends itself poorly to compensate for any installation errors in which there is not a correct parallelism between support and wall.

In fact, the parallelism error is also transmitted onto the plate that is mounted on the support and, again, a partial contact with the wall can occur.

In a known solution, it is provided to use an external frame mounted on flexible arms, which allow this frame not only to float moving towards the external surface of the plate, but also to make limited rotations.

However, this solution has limitations in terms of robustness and complexity of realization. Both the arms and the external frame can be easily subject to breakages and the mounting of the structure formed by arms and external frame on the main structure of the plate makes the production process more complex. Aim of the present invention is to make available a cover plate for an assembly for the wall installation of electric modules structurally and functionally conceived to overcome at least in part one or more of the limits of the aforementioned prior art. Within the scope of this problem, an aim of the present invention is to provide a cover plate for assemblies for the wall installation in which it is possible to effectively compensate for any installation errors or planarity defects of the wall on which it is used.

A further aim is to make available a cover plate that adequately allows to protect the components of the assembly for the wall installation of electric modules covered by it from the entry of dust and other unwanted elements.

Aim of the present invention is also to make available a cover plate that is resistant during the installation and to any stresses that occur by removing the plate from the relative support frame.

A further aim is to provide a cover plate that is easily manufacturable and that has production costs comparable to that of the traditional solutions.

This problem is solved and one or more of these aims are achieved, at least in part, by the invention by means of a cover plate for assemblies for the installation of electric modules comprising a main frame structure which defines a central opening and a relevant opening axis and an auxiliary frame structure which is connected to said main frame structure.

Preferably said main frame structure is connected to said auxiliary frame structure in such a manner that said main frame structure is, during use, at least partially superimposed on said auxiliary frame structure.

Preferably said cover plate further comprises an abutment element which is configured so as to connect said auxiliary frame structure and said main frame structure.

Preferably said abutment element keeps said main frame structure and said auxiliary frame structure in contact, in a zone adjacent to said opening.

Preferably said abutment element is configured so as to define a separation distance along said opening axis between said auxiliary frame structure and said main frame structure in a zone which is more peripheral relative to said opening, with respect to said zone in which said auxiliary frame structure and said main frame structure are in contact.

Preferably said auxiliary frame structure has weaker rigidity than said main frame structure so as to be able to be deformed in order to reduce said separation distance.

It will be appreciated that thanks to the possibility of varying the separation distance between the two frame structures it is possible to compensate for any installation errors or irregularities in the wall by exploiting the deformability of the auxiliary frame structure.

This deformation is at the same time hidden by the main frame structure that remains visible during the use of the plate.

According to a further aspect, the present invention also refers to an assembly for the wall installation of electric modules comprising a support frame which is configured so as to be able to be fixed to a wall and comprising a perimeter structure which delimits a through-opening which is intended to receive at least one electric module and a cover plate having one or more of the characteristics mentioned in the previous aspect.

It will be appreciated that also on the basis of this aspect, similarly to what has been previously illustrated, it is possible to obtain an effective compensation during the installation step, adequately protecting the components covered by the plate and guaranteeing an appreciable visual impact.

The present invention, in one or more of the aforesaid aspects, may have one or more of the following preferred features.

In some embodiments said main frame structure is configured in such a manner that a main surface of said main frame structure is directed outwards during the use of the cover plate in an assembly for the installation of electric modules.

In this way the visible part of the protection plate is formed by the main frame structure which does not require to be deformed during the use of the plate. Preferably said abutment element is of frame-like form.

In this way, the deformability of the auxiliary support structure can be promoted in the region of the entire perimeter of the plate.

In some embodiments, said abutment element is formed on said auxiliary frame structure, thus contributing to the simplicity of making the plate.

Preferably, the cover plate comprises connection means with respect to a support frame which is configured so as to be able to be fixed to a wall and comprising a perimeter structure which delimits a through-opening which is intended to receive at least one electric module.

Preferably said connection means are arranged in a zone adjacent to said abutment element.

In this way, the plate can be connected to the relevant support frame exerting a pressure in the region of the zone adjacent to the opening, that is, in a zone less subject, or not subject at all, to deformability.

Preferably, said connection means are connected to said auxiliary frame structure, contributing also in this case to simplifying the realization of the plate. Preferably said main frame structure extends in a direction perpendicular to said opening axis to a greater extent than said auxiliary frame structure in such a manner that said main frame structure is completely superimposed on said auxiliary frame structure.

Preferably said main frame structure covers, during use, said auxiliary frame structure.

Preferably said auxiliary frame structure is made of plastic material.

Thanks to one or more of these characteristics, the auxiliary frame structure is entirely covered when the plate is used and, consequently, can be made of plastic material, without the need to provide particular aesthetic characteristics for the surfaces of the auxiliary frame structure.

Preferably said main frame structure and said auxiliary frame structure comprise respective edges, the edge of said auxiliary frame structure being arranged internally with respect to said main frame structure.

Preferably the edge of said main frame structure and/or of said auxiliary frame structure is an external edge.

Preferably, the edge of said main frame structure and/or of said auxiliary frame structure develop/s perpendicular or inclined with respect to a plane which is normal to said opening axis.

Preferably said edge of said auxiliary frame structure is configured so as to abut the wall when the cover plate is fixed to the support frame of the assembly for the installation.

The presence of edges guarantees greater coverage, especially from a visual point of view, of the perimeter zone, further contributing to improving the aesthetic appearance of the plate.

Preferably said auxiliary frame structure is configured so as to deform, decreasing said separation distance, when said edge of said auxiliary frame structure abuts the wall, preferably following the fixing of the cover plate on the support frame.

In this way, the deformation of the auxiliary frame structure takes place following the contact between the edge and the wall, thus obtaining the deformation and the relevant compensation automatically following the fixing of the plate.

Preferably said edge of said auxiliary frame structure is protruding with respect to the edge of said main frame structure along a direction away with respect to the main frame structure. Preferably said away-movement direction is substantially parallel to said opening axis.

Further preferred aspects are also defined in the appended claims.

In the present description as well as in the claims appended hereto, and more generally in the context of the present invention, some terms and expressions are deemed to assume, unless otherwise explicitly indicated, the meaning expressed in the following definitions.

In particular, the term "electric module" means any module, also called outlet, which can be used in a domestic, commercial or industrial electric system. Such modules may comprise, by way of non-limiting example, sockets, switches of various kind, sensors, ringtones, but also fake keys with a cover function.

The term "frame structure" means any structure that extends around an opening. The structure can be formed by a single body or by several parts. In addition, it may surround the opening in a continuous manner or provide for one or more interruptions.

The term "rigidity" refers to the ability of a component or in general a body to oppose the elastic deformation caused by an applied force.

The characteristics and further advantages of the invention will become clearer from the following detailed description of a preferred but not exclusive embodiment thereof illustrated, by way of non-limiting example, with reference to the accompanying drawings in which:
- figure 1 is a perspective view of an assembly for the installation of an electric module comprising a cover plate according to the present invention;
- figures 2 and 2A are a cross-sectional view, and a relevant detail, of a cover plate according to the present invention;
- figure 3 is an exploded perspective view of the cover plate according to the present invention; and
- figures 4 and 4A are a perspective view and a relevant detail of an auxiliary frame structure, detail of the cover plate according to the present invention.

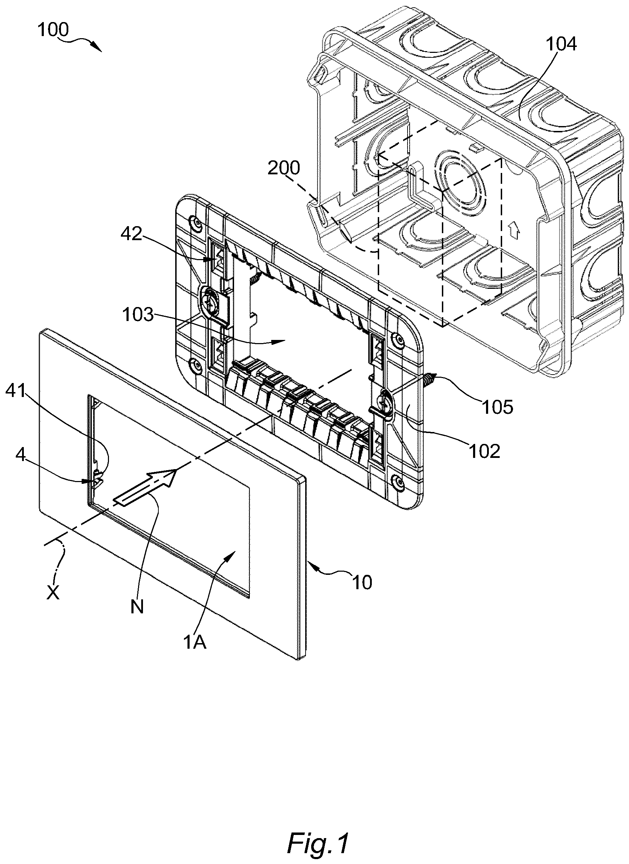

With reference initially to figure 1, with reference numeral 100 it is indicated as a whole an assembly for the installation to a wall of an electric module 200, comprising a cover plate 10 according to the present invention.

By way of example, the assembly 100 may comprise a support frame 101 which is arranged to be fixed to a wall or to other structure, and a cover plate 10 which is superimposable, in a manner better described below, on the support frame 101. In the example illustrated in the figure, the installation also provides using a box-like element 104, which is intended to be recessed in the wall or in the gaps of light walls and on which the frame 101 is fixed.

For example, the frame 1 can be fixed to the recessed box by means of special screws 105 that can be engaged in relevant seats formed in the box. It will in any case be appreciated that the support frame 101 and in general the plate and the assembly of the present invention can also be intended for an installation without a recessed box, for example on a panel, on an external box or on another type of support.

The support frame 101 is also arranged for the installation of one or more electric modules 200. For example, a module used in the aforesaid frame is schematically illustrated in figure 1 by means of dashed lines.

The modules 200 can be fixed to the frame in the region of a through-opening 103, illustrated for example in figure 1, and fixed thereto by means of appropriate connection means, not illustrated in greater detail in the context of the present invention.

In some embodiments, the support frame 101 comprises a perimeter structure 102 which is configured so as to abut the wall P. Advantageously, the perimeter structure 102 delimits the aforementioned through-opening 103. In preferred embodiments, the perimeter structure 102 has a substantially rectangular or square shape.

The cover plate 10 of the present invention is preferably configured so as to cover the perimeter structure 102 of the support frame 101.

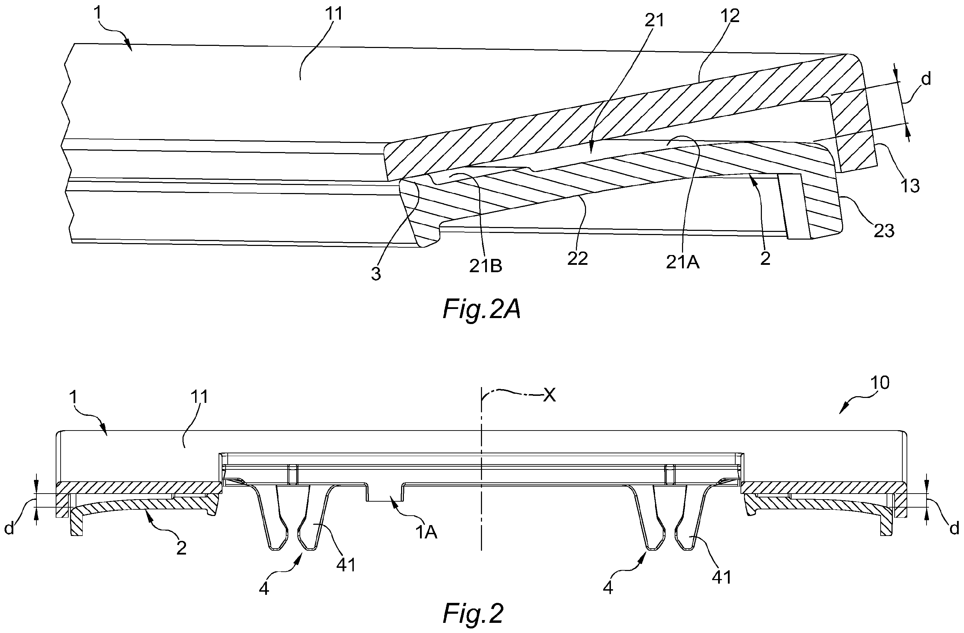

With reference now also to figure 2, according to some aspects of the invention, the cover plate 2 has essentially flat development. The fixing of the plate 10 to the frame 101 preferably takes place by moving the plate 10 closer to the frame 101 along a coupling direction N, preferably perpendicular to the wall and preferably parallel to an opening axis X defined by a through-opening 1A formed on the cover plate 1.

Advantageously, the opening axis X coincides with a corresponding opening axis which is defined by the through-opening 103 of the support frame 101.

There are also special connection means 4, better visible in figure 2 and illustrated in greater detail below, by means of which the cover plate 10 is coupled to the frame 101, when it is approached along the coupling direction N.

In preferred embodiments, the connection means are configured in such a manner that, when the cover plate 10 is fixed to the support frame 101, this one is urged towards the frame or, in any case, a movement in a direction away from it is prevented, except by acting with significant force.

In this way, a stable connection between plate and frame can be guaranteed, by keeping the contact between plate and wall, as will be illustrated in greater detail below.

In preferred embodiments, the connection means 4 comprise extensions 41 which are formed on said cover plate 10 which extend away from a plane defined by said through-opening 1A, in a direction opposite to an external surface 11 of said plate. The extensions 41 are advantageously configured so as to engage in respective openings 42 formed on the support frame 101 so as to produce a connection between plate and frame having the aforementioned characteristics.

However, it will be appreciated that different connection means may also be provided, which for example may comprise seats made on the opening and coupling elements on the frame.

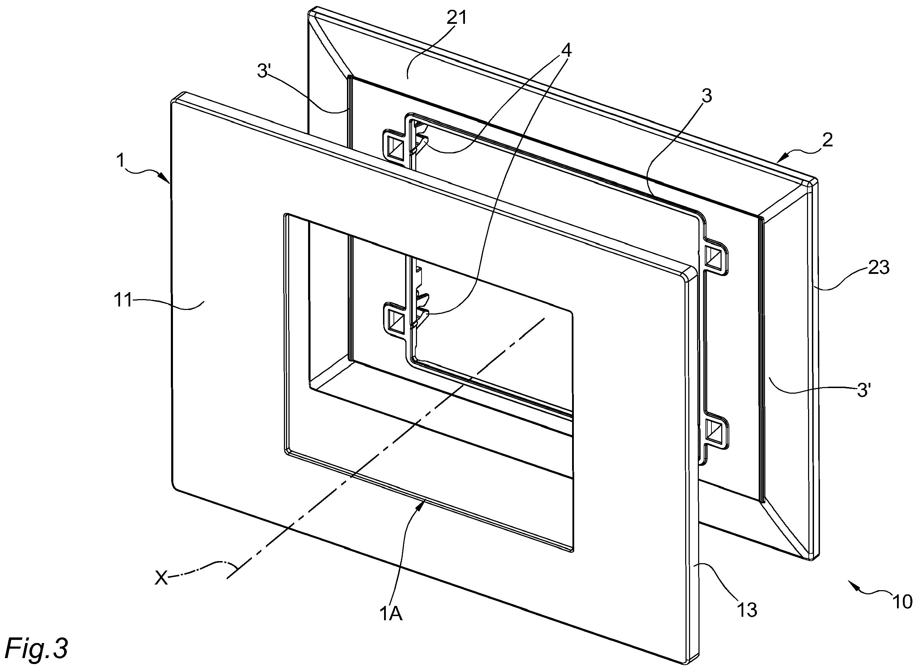

With reference now also to figure 3, the cover plate 10 advantageously has as a whole a frame shape which, as previously mentioned, defines the relevant through-opening 1A through which access to the modules 200 is allowed, for example to fit a plug into the socket or to act on a switch.

The cover plate 10 comprises a main frame structure 1 and an auxiliary frame structure 2 which is connected to the main frame structure 1. As can be observed from figure 3, the two frame structures are superimposed on each other, in such a manner that the main frame structure 1 covers, during use, the auxiliary frame structure 2.

It will be appreciated that in preferred embodiments the main frame structure 1 and the auxiliary frame structure 2 comprise respective main, or external, surfaces 11, 21 configured so as to be directed away from the wall on which the plate is installed, and secondary, or internal, surfaces 12, 22 configured so as to be directed towards the wall.

Advantageously, the main surface 11 of the main structure 1 is intended to be directed outwards during use of the plate and, for this reason, it can be provided with a particular surface finish, such as for example the one provided by a coloured or glossy paint in the case where the structure is made of plastic material or even by a specific surface finish in the case of metallic materials.

Preferably, the secondary surface 12 of the main structure 1 is directed towards the main surface 21 of the auxiliary structure 2.

As can also be observed from figures 2 and 2A, the cover plate 10 further comprises an abutment element 3 which is configured so as to connect the auxiliary frame structure 2 and the main frame structure 1, bringing them into contact, in a zone that is more adjacent to the opening 1A.

As can be observed from figure 2A, in some embodiments the contact between the auxiliary frame structure 2 and the main frame structure 1 occurs in the region the abutment element 3.

In the other zones, and in particular in a zone which is more peripheral to said opening 1A, with respect to the zone where the two frame structures are in contact, a separation distance d is defined, which is measured in a direction parallel to the opening axis X, between the auxiliary frame structure 2 and the main frame structure 1.

In some embodiments the distance d is variable away from the opening 1A, preferably increasing.

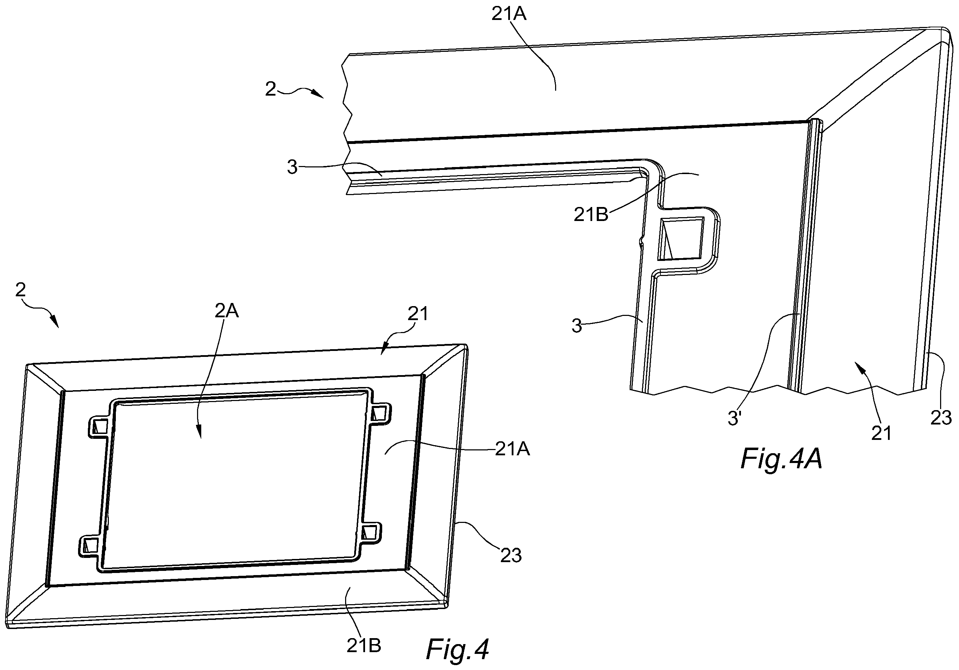

For this purpose, the main surface 21 of the auxiliary frame structure 2 may have a curved development portion 21A, illustrated in greater detail in figures 4 and 4A. Optionally, the curved development portion 21A can be combined with a flat development portion 21B, which is arranged internally with respect to the surface 21A.

Thanks to the presence of the abutment element 3, the auxiliary frame structure 2 can deform following a stress acting in the region of an external edge 23 thereof, which is configured to abut the wall when the plate is installed.

It will be appreciated that, the edge 23 is protruding with respect to the main frame structure 1 along a direction away with respect to the main frame substantially parallel to the axis X. In this way the edge comes into contact with the wall when the plate is installed, causing the deformation of the auxiliary frame structure 2. In some embodiments the main frame structure 1 may comprise a respective external edge 13 and the respective external edge 23 of the auxiliary frame structure 2 may protrude in the aforesaid direction with respect to the external edge 13 of the main frame structure 1.

In general, the auxiliary frame structure 2 can be deformed by decreasing the separation distance d.

Advantageously, the auxiliary frame structure 2 has weaker rigidity than said main frame structure 1, thus making a deformation possible following the lever effect that is produced by urging the edge 23 against the wall and by constraining the auxiliary structure 2 by means of the abutment element 3.

To obtain this different rigidity, different materials can be used for the main frame structure 1 and the auxiliary frame structure 2.

For example, the main frame structure 1 may be made of metallic material and the auxiliary frame structure 2 of plastic material.

Alternatively, or in combination with the previous example, it may be provided to use materials with different thicknesses.

Another example can be represented by the presence of reinforcement elements present in the material that must have greater rigidity, or lightening elements in the material that must deform to a greater extent.

Example of materials for the main frame structure 1 zamak, Zn-Ti alloy, aluminium, steel or wood and for the auxiliary frame structure 2 polycarbonate or ABS. Obviously such examples are provided by way of example and also further materials may be adopted within the scope of the present invention. In addition, the main frame 1 can also be made of plastic materials, such as polycarbonate or ABS, or it can be formed by superimposing layers of different materials.

In some embodiments, as can be observed from figure 2A, the main frame structure 1 protrudes externally with respect to the auxiliary structure 2 and can be entirely superimposed on the auxiliary frame structure 2.

More generally, the main frame structure 1 may extend in a direction perpendicular to the opening axis X to a greater extent than the auxiliary frame structure 2. Preferably, the respective external edge 13 of the main frame structure 1 develops perpendicular or inclined with respect to a plane which is normal to said opening axis X.

Also the external edge 23 of the auxiliary structure 2 can develop perpendicular or inclined with respect to this plane.

In such a configuration, the edge of the auxiliary frame structure 2 is arranged internally with respect to said main frame structure 1.

With reference now to figures 4 and 4A, in some embodiments, the abutment member 3 is of frame-like form.

In this way, the deformation of the auxiliary frame can be located in the zones where the greatest contact with the wall occurs, and therefore it will be greater in the zones where there are irregularities that make the wall protrude.

As can also be observed from figure 2A, the abutment element 3 is preferably formed on the auxiliary frame structure 2 and may be in the form of a protuberance formed in the region of the flat development portion 21B.

In some embodiments, it may be provided for an intermediate abutment element 3' which is arranged in an intermediate position between the abutment element 3 and the external edge 23 of the auxiliary frame structure 2.

The intermediate abutment element can be used to make the auxiliary frame structure 2 less deformable in the region of specific zones. For example, in the example illustrated in figure 4, the auxiliary frame structure 2 has intermediate abutment elements 3' in the region of the short sides of the rectangle defined by the cover plate, limiting the deformability in the region of these short sides.

The invention thus solves the proposed problem, while achieving a plurality of advantages. In particular, the cover plate of the present invention allows to compensate for any irregularities of the wall with a particularly resistant and constructively simple structure. In addition, the possibility of deformation of the auxiliary structure makes it possible to isolate to a greater extent from the external agents the zones covered by the plate than the known solutions. At the same time, the cover offered by the main structure allows to keep a high aesthetic quality for the plate, offering the possibility of using a wide range of materials.

## Claims

1. A cover plate (10) for assemblies (100) for the installation of electric modules (200) comprising a main frame structure (1) which defines a central opening (1A) and a respective opening axis (X), an auxiliary frame structure (2) which is connected to said main frame structure (1) in such manner that said main frame structure (1) is, during use, at least partially superimposed on said auxiliary frame structure (2), said cover plate (10) further comprising an abutment element (3) which is configured so as to connect said auxiliary frame structure (2) to said main frame structure (1), keeping them in contact, in a zone adjacent to said opening (1A) and to define a separation distance (d) along said opening axis (x) between said auxiliary frame structure (2) and said main frame structure (1) in a zone which is more peripheral relative to said opening (1A) with respect to said zone in which said auxiliary frame structure (2) and said main frame structure (1) are in contact, wherein said auxiliary frame structure (2) has weaker rigidity than said main frame structure (1) so as to be able to be deformed in order to reduce said separation distance (d).

2. A cover plate (10) according to the preceding claim, wherein said main frame structure (1) is configured in such a manner that a main surface (11) of said main frame structure (1) is directed outwards during the use of the cover plate (10) in an assembly (100) for the installation of electric modules (200).

3. A cover plate (10) according to any one of the preceding claims, wherein said abutment element (3) is of frame-like form.

4. A cover plate (10) according to any one of the preceding claims, wherein said abutment element (3) is formed on said auxiliary frame structure (2).

5. A cover plate (10) according to any one of the preceding claims, comprising connection means (4) for connection to a support frame (101) which is configured so as to be able to be fixed to a wall and comprising a perimeter structure (102) which delimits a through-opening (103) which is intended to receive at least one electric module (200).

6. A cover plate (10) according to the preceding claim, wherein said connection means (4) are connected to said auxiliary frame structure (2).

7. A cover plate (10) according to any one of the preceding claims, wherein said main frame structure (1) extends in a direction perpendicular to said opening axis (X) to a greater extent than said auxiliary frame structure (2) in such a manner that said main frame structure (1) is completely superimposed on said auxiliary frame structure (2).

8. A cover plate (10) according to any one of the preceding claims, wherein said main frame structure (1) covers, during use, said auxiliary frame structure (2), said auxiliary frame structure (2) preferably being completely covered by said main frame structure (1).

9. A cover plate (10) according to any one of the preceding claims, wherein said main frame structure (1) and said auxiliary frame structure (2) comprise respective edges (13, 23).

10. A cover plate (10) according to claim 9, wherein said edges (13, 23) develop perpendicular or inclined with respect to a plane which is normal to said opening axis (X).

11. A cover plate (10) according to claim 9 or 10, wherein said edge (23) of said auxiliary frame structure (2) is arranged internally with respect to said main frame structure (1).

12. A cover plate (10) according to any one of claims 9 to 11, wherein said edge of said auxiliary frame structure (2) is configured so as to abut the wall when the cover plate (10) is fixed to the support frame (101) of the assembly (100) for the installation.

13. A cover plate (10) according to any one of claims 9 to 12, wherein said auxiliary frame structure (2) is configured so as to deform, decreasing said separation distance (d), when said edge (23) of said auxiliary frame structure (2) abuts the wall following the fixing of the cover plate (10) on the support frame (101).

14. A cover plate (10) according to any one of claims 9 to 13, wherein said edge (23) of said auxiliary frame structure (2) is protruding with respect to the edge (13) of said main frame structure (1) along a direction away with respect to the main frame structure (1), said direction away being substantially parallel to said opening axis (X).

15. An assembly (100) for the wall installation of electric modules (200) comprising a support frame (101) which is configured so as to be able to be fixed to a wall and comprising a perimeter structure (102) which delimits a through-opening (103) which is intended to receive at least one electric module (200) and a cover plate (10) according to any one of the preceding claims.
